# EUROPEAN PATENT APPLICATION

(11) **EP 2 540 372 A2**
(43) Date of publication of application: **02.01.2013**
(21) Application number: 12172927.1
(22) Date of filing: 21.06.2012
(51) Int. Cl.: B01D 46/02, B01D 46/00

(54) **Filter Assembly for Use in a Baghouse**

(30) Priority: 27.06.2011 US 201113169816
(71) Applicant: General Electric Company, Schenectady, NY 12345 (US)
(72) Inventor: Doehla, James Roy, Raytown, MO Missouri 64133 (US); Mei, Jason, Lee's Summit, MO Missouri 64082 (US)
(74) Representative: Picker, Madeline Margaret

(57) **Abstract**

A filtration system (41) is provided. The filtration system (41) includes a flexible attachment portion (100), the attachment portion configured to couple a bag filter (110) to a tube sheet (54), an adapter ring (102) attached to the attachment portion, and a bag filter (110) attached to the adapter ring (102).

## Description

### BACKGROUND OF THE INVENTION

The field of the invention relates generally to filter assemblies for use in baghouses, and more particularly, to baghouses in industrial filtration applications.

### BRIEF DESCRIPTION OF THE INVENTION

In one aspect, a filtration system is provided. The filtration system includes a flexible attachment portion, the attachment portion configured to couple the bag filter to a tube sheet, an adapter ring attached to the attachment portion, and a bag filter attached to the adapter ring.

In another aspect, attachment portion configured to couple a bag filter to a tube sheet is provided. The attachment portion includes an adapter ring configured to couple the bag filter to the attachment ring.

In another aspect, method for assembling a filtration system for use in an industrial air filtration unit is provided. The method includes molding an attachment portion, attaching an adapter ring to the attachment portion, and providing a bag filter. The method further includes coupling an attachment portion to the bag filter using an adapter ring, wherein the attachment portion includes a cavity defined by a first flange, and a second flange spaced a distance from the first flange, such that an annular slot is defined between the first and second flanges and coupling the attachment portion to a tube sheet within the industrial air filtration unit, such that the tube sheet is secured in the slot between the first and second flanges.

### BRIEF DESCRIPTION OF THE DRAWINGS

FIG. 1 is a schematic illustration of an example filtration system that may be used with shown in FIG. 1.
FIG. 2 is an enlarged schematic illustration of an example filter assembly that may be used with the filtration system shown in FIG. 1.

### DETAILED DESCRIPTION OF EMBODIMENTS OF THE INVENTION

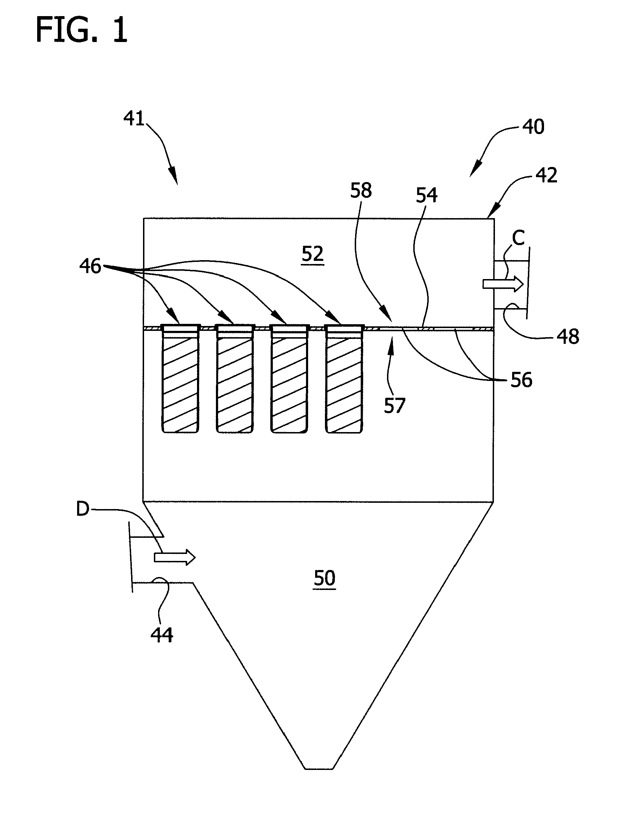

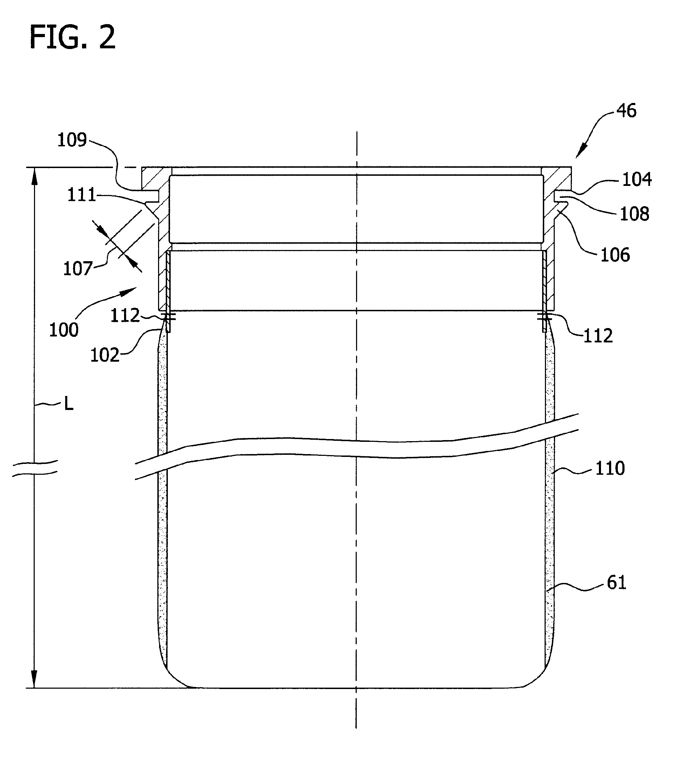

Fig. 1 is a schematic illustration of an example filtration system 41 that is contained in air plenum or baghouse 40. FIG. 2 is an enlarged cross-sectional view of an example filter assembly 46 that may be used with filtration system 41. In the example embodiment, baghouse 40 includes a housing 42 that includes an inlet 44 and an outlet 48 that is downstream from inlet 44. A tube sheet 54, which extends across baghouse 40, divides baghouse 40 into a dirty air plenum 50 and a clean air plenum 52. As used herein, the terms "dirty air" and/or "dirty gas" are defined as particulate-containing air and/or gas, and the terms "clean air" and/or "clean air" are defined as air and/or gas that has had substantially all particulate matter removed therefrom.

In the example embodiment, tube sheet 54 is fabricated from a heat-resistive material, such as sheet metal, and includes at least a portion that is substantially planar. The planar portion of tube sheet 54 includes a plurality of apertures 56 defined therein. In the example embodiment, tube sheet 54 is positioned against the inner walls of the outer periphery of baghouse such that apertures 56 are the only locations within baghouse 40 that couple the dirty air plenum 50 and the clean air plenum in flow communication. In the example embodiment, apertures 56 are substantially evenly spaced across tube sheet 54. Alternatively, apertures 56 can have any spacing that allows baghouse 40 to function as described herein.

Each filter assembly 46 is coupled to tube sheet 54 at a respective aperture 56. More specifically, each filter assembly 46 is coupled against tube sheet 54 such that each assembly 46 extends at least partially through a respective aperture 56. As such, in the example embodiment, each filter assembly 46 is positioned against both a dirty air side 57 and a clean air side 58 of tube sheet 54 as described in more detail below. Moreover, when fully assembled, dirty gas plenum 50 is substantially isolated and is substantially sealed from clean gas plenum 52 other than being in flow communication with plenum 50 via apertures 56. Although, filter assemblies 46 are illustrated as being vertically oriented, it should be noted that tube sheet 54 and filter assemblies 46 could be mounted in any relative orientation that enables baghouse 40 to function as described herein.

In the example embodiment, each filter assembly 46 includes an attachment portion 100, which includes an adaptor ring 102 coupled to a bag filter 110. More specifically, in the example embodiment, bag filter 110 circumscribes attachment portion 100 and specifically, filter 110 circumscribes an outer periphery of adapter ring 102. In one embodiment, a cage is provided in the inner periphery of each bag filter 110 to provide support. Each bag filter 110 may be constructed of any material that enables a desired level of filtering to be satisfied based on the operating conditions of baghouse 40. For example, filter 110 may be fabricated from materials such as, but not limited to polyester, polypropylene, PPS, acrylic, fiberglass.

Attachment portion 100 includes a first tube sheet flange 104 and a second tube sheet flange 106. Flanges 104 and 106 are oriented such that a cavity 108 is defined between flanges 104 and 106. Cavity 108, as described in more detail below, is sized and shaped to receive tube sheet 54. First tube sheet flange 104 includes a substantially planar surface, and second tube sheet flange 106 includes a substantially tapered surface 107. Tapered surface 107 facilitates attachment portion 100 being inserted into tube sheet 54. Attachment portion 100 may be fabricated from any material that substantially prevents the ingress or egress of air or water, such as, but not limited to, polyurethane, silicone, neoprene, synthetic rubber made from polyurethane and is flexible to accommodate installation in tube sheet 54.

In the example embodiment, adapter ring 102 is bonded to attachment portion 100 via a molding process in which adapter ring 102 is inserted in attachment portion 100. In such an embodiment, attachment portion 100 cures and adapter ring 102 is bonded internally with portion 100. In an alternative embodiment, adapter ring 102 is fabricated as part of a unitary mold with portion 100. In the example embodiment, adapter ring 102 is fabricated from materials that are substantially impervious to air and fluid, such as, but not limited to polyester, polypropylene, PPS, acrylic, urethane, synthetic rubber. In the example embodiment, bag filter 110 is coupled to adapter ring 102 by coupling filter 110 to flange 104 via a stitching process, wherein at least one stitch 112 is used. Any stitching hole size may be used to couple bag filter 110 to adapter ring 102 that enables attachment portion 100 to remain substantially impermeable to air and fluid. In one embodiment, bag filter 110 and adapter ring 102 are sealed after stitches 112 are used to couple bag filter 110 to adapter ring 102. In an alternative embodiment, bag filter 110 is coupled to adapter ring 102 via a welding process, such as a sonic welding process. In another embodiment, bag filter 110 is coupled to adapter ring 102 via an adhesive process. Alternatively, any other bonding technique can be sued to couple bag filter 110 to adapter ring 102.

In the example embodiment, filter 110 is formed with a tubular configuration that has a substantially circular cross-sectional profile. Alternatively, filter media 61 may be formed in any shape or configuration that enables assemblies 46 to function as described herein. Filter assemblies 46 may be fabricated from any filter media that enables filter assembly 41 to function as described herein, including but not limited to, polyester, polypropylene, PPS, acrylic, fiberglass. Moreover, filter assemblies 46 may be formed with any desired length L that enables the filtering requirements of baghouse 40 to be satisfied.

When filter assembly 46 is inserted in baghouse tube sheet 54, tapered surface 107 of flange 106 facilitates attachment portion 100 being inserted into tube sheet 54 in a snap fit configuration. In the example embodiment, tube sheet 54 is seated in cavity 108 such that an outer periphery of each aperture 56 is in sealing contact with attachment portion 100. Cavity 108 is defined between a first tube sheet flange surface 109 and a second tube sheet flange surface 111. Tube sheet flange surfaces 109 and 111 are coupled to tube sheet 54 in a friction fit such that sealing contact is made between flange surface 109 and tube sheet 54, and between flange surface 111 and tube sheet 54.

During operation, particulate-laden gas flow D enters inlet 44, and clean gas flow C is discharged through outlet 48 towards turbine engine inlet 30 (shown in FIG. 1). More specifically, particulate-laden flow D is filtered by assemblies 46 positioned within baghouse 40 and clean flow C exits through baghouse outlet 48. Dirty gas plenum 50 is substantially sealed from clean gas plenum 52 with filter assembly 46 such that flow communication therebetween is substantially prevented between dirty gas plenum 50 and clean gas plenum 52 except through assemblies 46. Tube sheet flanges 104 and 106 supports filter assembly 46 as the filter assembly 46 is suspended from tube sheet 54 as flow moves through filter assembly 46 during operation of baghouse 40.

The above described methods and systems provide a cost effective filter assembly that can accommodate the aperture size variations found in baghouse tube sheets. The above described filter assemblies provide effective sealing of varying sized apertures within tube sheets, such that dust leakage around the filter bags is substantially prevented regardless of the size of the tube sheet apertures. The use of the above described filter assemblies also decreases the need to reject an entire set of bag filters that may be improperly sized to fit tube sheet apertures.

Example embodiments of filter assembly for an industrial air filtration unit are described above in detail. The methods and systems are not limited to the specific embodiments described herein, but rather, components of systems and/or steps of the methods may be utilized independently and separately from other components and/or steps described herein. For example, the methods may also be used in combination with other filtration systems and methods, and are not limited to practice with only the turbine systems and methods as described herein. Rather, the example embodiment can be implemented and utilized in connection with many other filtration or sealing applications such as but not limited to cement kilns, cement transfer stations, asphalt plants, foundries, lime kilns, coal fired power plant baghouses, fly ash handling, bin vents, wood processing dust collectors, spray driers, aluminum ore processing, steel mills, and food processing plants.

Although specific features of various embodiments of the invention may be shown in some drawings and not in others, this is for convenience only. In accordance with the principles of the invention, any feature of a drawing may be referenced and/or claimed in combination with any feature of any other drawing.

## Claims

1. A filtration system (41) comprising:
a flexible attachment portion (100), said attachment portion configured to couple a bag filter (110) to a tube sheet (54);
an adapter ring (102) attached to said attachment portion; and
a bag filter attached to said adapter ring (102).

2. A filtration system (41) in accordance with Claim 1, wherein the tube sheet (54) is secured within an annular slot (108) defined between a first flange (104) and a second flange (106) extending from said attachment portion (100), and wherein said first flange extends radially outward across the tube sheet farther than said second flange.

3. A filtration system (41) in accordance with Claim 2, wherein said second flange (106) is oriented to taper from the slot (108) towards a center of said attachment portion (100).

4. A filtration system (41) in accordance with Claim 3, wherein said adapter ring (102) is molded to said attachment portion (100).

5. A filtration system (41) in accordance with any one of Claims 1 to 4, wherein:
said adapter ring (102) is bonded to said attachment portion (100); or
said adapter ring (102) is integrally formed with said attachment portion (100);or
said attachment portion (100) is coupled to said bag (110) using welding.

6. An attachment portion (100) configured to couple a bag filter (110) to a tube sheet (54), said attachment portion comprising an adapter ring (102) configured to couple the bag filter to said attachment ring.

7. An attachment portion (100) in accordance with Claim 6, further comprising:
a first flange (104) extending from said attachment portion (100) and configured to couple against a first side of a tube sheet (54); and
a second flange (106) extending from said attachment portion (100) and configured to couple against a second side of a tube sheet, said second flange spaced from said first flange such that an annular cavity (108) is defined therebetween, the tube sheet secured in said annular cavity, wherein said first flange extends radially outward across the tube sheet farther than said second flange.

8. An attachment portion (100) in accordance with Claim 7, wherein said second flange (106) is oriented to taper from the cavity towards a center of said attachment portion.

9. An attachment portion in accordance with Claim 7 or Claim 8, wherein said second flange further comprises a second flange configured to flex as said attachment portion is coupled to the tube sheet.

10. An attachment portion in accordance with any one of Claims 6 to 9, wherein said adapter ring is bonded to said attachment ring; and/or
said adapter ring is integrally formed with said attachment ring.

11. A method for assembling a filtration system for use in an industrial air filtration unit, said method comprising:
molding an attachment portion (100);
attaching an adapter ring (102) to the attachment portion (100);
providing a bag filter (110);
coupling an attachment portion (100) to the bag filter (110) using an adapter ring (102), wherein the attachment portion (100) includes a cavity defined by a first flange, and a second flange spaced a distance from the first flange, such that an annular slot is defined between the first and second flanges; and
coupling the attachment portion (100) to a tube sheet (54) within the industrial air filtration unit, such that the tube sheet is secured in the slot between the first and second flanges.

12. A method for assembling a filtration system in accordance with Claim 11, wherein coupling an attachment portion (100) to the tube sheet (54) further comprises coupling the attachment portion to the tube sheet such that a first flange extends radially outward across the tube sheet farther that the second flange.

13. A method for assembling a filtration system in accordance with Claim 11 or Claim 12, wherein coupling an attachment portion (100) to the bag filter (110) further comprises coupling the attachment portion to the bag filter such that the second flange is oriented to taper from the cavity towards a center of the attachment portion, and preferably such that the second flange is configured to flex as the attachment portion (100) is coupled to the tube sheet (54).

14. A method for assembling a filtration system in accordance with Claim 11, 12 or 13, wherein coupling an attachment portion to the tube sheet further comprises coupling the attachment portion (100) to the tube sheet (54) in a snap fit configuration, and preferably further comprising providing an attachment portion (100) that includes an adapter ring (102) integrally formed with the attachment portion (100).

15. A method for assembling a filtration system in accordance with any one of Claims 11 to 14, wherein coupling an attachment portion (100) to the bag filter (54) further comprises coupling the attachment portion to the bag filter using at least one of welding and stitching.
